(19) Europäisches Patentamt
European Patent Office
Office européen des brevets

(11) **EP 4 471 268 A1**

(12) **EUROPEAN PATENT APPLICATION**

(43) Date of publication:
**04.12.2024 Bulletin 2024/49**

(21) Application number: **24176880.3**

(22) Date of filing: **20.05.2024**

(51) International Patent Classification (IPC):
**F02M 21/02** (2006.01)

(52) Cooperative Patent Classification (CPC):
**F02M 21/0242; F02M 21/0233**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023090432**

(71) Applicant: **Nikki Co., Ltd.**
**Atsugi, Kanagawa 243-0801 (JP)**

(72) Inventors:
• **SUENAGA, Naoya**
**Atsugi, 243-0801 (JP)**
• **SUEMATSU, Yukinori**
**Atsugi, 243-0801 (JP)**
• **AIZAWA, Shutaro**
**Atsugi, 243-0801 (JP)**

(74) Representative: **Boult Wade Tennant LLP**
**Salisbury Square House**
**8 Salisbury Square**
**London EC4Y 8AP (GB)**

(54) **ELECTRONICALLY CONTROLLED REGULATOR**

(57) Provided is an electronically controlled regulator (1A) having a body (10A) sectioned into a high-pressure chamber (2A), a discharge pressure chamber (3A), a pressure control chamber (4A), and an atmospheric pressure chamber (5A), and including a pressure regulating valve including: a valve shaft (21A) having a valve body (22), a valve seat (23) in close contact with the valve body (22), and a discharge pressure regulating unit that regulates a fluid pressure by causing the valve shaft (21A) to reciprocate through driving of an electric motor (30), in which a high-pressure fluid introduced is regulated to a set pressure and discharged, and three diameters of a seat diameter (Ds) of the valve seat (23) as a boundary between the high-pressure chamber (2A) and the discharge pressure chamber (3A), a seal diameter (Dh) of an O-ring (72) which is a seal member on the atmospheric pressure chamber side as a boundary between the high-pressure chamber (2A) and the atmospheric pressure chamber (5A), and a seal diameter (Do) of the O-ring (71) which is a seal member on the pressure control chamber side as a boundary between the discharge pressure chamber (3A) and the pressure control chamber (4A), are made substantially the same.

FIG.2

EP 4 471 268 A1

**Description**

BACKGROUND

Technical Field

The present invention relates to a regulator that discharges a high-pressure fluid such as a gas fuel while depressurizing and regulating the fluid to a predetermined pressure, and in particular, to an electronically controlled regulator that regulates a pressure of the fluid to be discharged by electronic control.

Related Art

As a regulator that depressurizes a high-pressure fluid to a predetermined pressure and delivers the depressurized fluid, for example, a gas fuel regulator described in JP 3594507 B2 has been well known. The regulator includes a valve shaft coaxially disposed with a valve body and a doughnut-shaped seat portion having a seat face which has a center penetrated by a valve hole and is in close contact with the valve body. The regulator has a structure in which, in a case of a high-pressure fluid such as CNG flowing into a body of the regulator, the valve shaft disposed in a reciprocally slidable manner in an axial direction with the valve body in a valve opened state is energized by a pressure regulating spring with the valve body pressed down in close contact with the seat face with a predetermined pressure, and a high-pressure gas fuel is discharged while being depressurized and regulated to a predetermined pressure.

However, in such conventional depressurization structure of the regulator, it is necessary to prepare the pressure regulating spring in advance for each specified discharge pressure, since a discharge pressure of the fluid by the regulator mechanically depends on a load of the pressure regulating spring. Further, in a regulator used in a fuel supply system of a vehicle, since the pressure regulating spring is fixed to a specified set height in advance, there is a problem that a discharge pressure range and a flow rate range are mechanically limited because a pressure drop increases in a case where an engine required flow rate is large and the pressure drop decreases in a case where the required flow rate is small.

Meanwhile, JP S59-160842 U has proposed a pressure regulating mechanism including a stepping motor that is pulse-controlled in accordance with an output signal from a pressure sensor disposed in a primary-side diaphragm chamber as an energizing force adjusting unit for adjusting an energizing force of a pressure regulating spring in the primary-side diaphragm chamber in an LPG regulator including the primary-side diaphragm chamber and a secondary-side diaphragm chamber.

Accordingly, with the pressure regulating mechanism including the stepping motor electronically controlled, it is possible to maintain a pressure in the primary-side diaphragm chamber at a desired pressure, by weaken the energizing force of the pressure regulating spring in a case where the pressure in the primary-side diaphragm chamber becomes higher than a preset pressure, and strengthen the energizing force of the pressure regulating spring in a case where the pressure in the primary-side diaphragm chamber becomes lower than the preset pressure.

However, only an inner portion of the primary-side diaphragm chamber can be adjusted and maintained to a desired pressure by the regulator, and a pressure of a fuel discharged from the secondary-side diaphragm chamber depends on the pressure regulating spring arranged in the chamber. Therefore, it is still difficult to set various discharge pressures by one type of regulator, and the problem that the discharge pressure range and the flow rate range are mechanically limited has not been solved.

In this regard, the inventors and applicants of the present application have proposed a regulator by electronic control of an electric motor as shown in FIG. 4 in Japanese Patent Application No. 2022-88066 filed previously. An electronically controlled regulator 1B includes, inside a columnar body 10B, a high-pressure chamber 2B including from an introduction port of a fluid introduction path 11 for introducing a high-pressure fluid to a valve portion of a pressure regulating valve 20B, a discharge pressure chamber 3B including from the valve portion to a discharge port of a fluid delivery path 12 for discharging a depressurized fluid, and a pressure control chamber 4B disposed with a discharge pressure regulating unit for depressurizing and regulating a pressure of the fluid to be discharged while operating the pressure regulating valve 20B to a predetermined pressure.

Then, the discharge pressure regulating unit constitutes a valve shaft moving structure that moves a valve shaft 21B having a proximal end side disposed with a pressure regulating spring 25 in the axial direction while operating by driving an electric motor 30 to change a distance between a valve body 22 and a valve seat 23, and opens and closes the pressure regulating valve 20B to maintain a pressure of the depressurized fluid to a set pressure while operating the valve shaft moving structure by the electric motor 30 based on a value of a pressure sensor for detecting the pressure of the depressurized fluid.

Accordingly, by adopt a manner to maintain a set discharge pressure through an opening and closing operation of the valve body 22 disposed with the valve shaft 21B while driving and controlling the electric motor 30 based on a discharge pressure detected by the sensor without regulating the discharge pressure only by the pressure regulating spring 25 disposed on the proximal end side of the valve shaft 21B, the present invention exhibit a function of automatically maintaining various set discharge pressures while flexibly responding to fluctuation of the required flow rate.

However, in the electronically controlled regulator 1B having such configuration, a required torque for the electric motor 30 varies depending on a setting range of the high-pressure chamber 2B and the discharge pressure chamber 3B due to a pressure load applied to the pressure regulating valve 20B. Therefore, it is necessary to prepare and layout the electric motor corresponding to various pressure applications, which tends to lead to an increase in cost in product manufacturing and supply.

SUMMARY

The present invention is to solve the above problems, and an object of the present invention is to enable the electronically controlled regulator to perform favorable pressure regulation while accommodating the various pressure applications without changing a type and layout of the electric motor.

The present invention made to solve the above problems is an electronically controlled regulator including, inside a body of the regulator formed with an introduction port and a discharge port, a pressure regulating valve including: a valve shaft that is coaxially disposed with a valve body on an outer peripheral portion at a middle position in a longitudinal direction and is able to reciprocate in an axial direction; a valve seat having a seat face capable of being in close contact with the valve body; and a discharge pressure regulating unit that regulates a pressure of a fluid by causing the valve shaft to reciprocate through driving of an electric motor electronically controlled to change a distance between the valve body and the valve seat, a high-pressure fluid introduced from the introduction port being discharged from the discharge port as a depressurized fluid at a set pressure on a side of a discharge pressure chamber while being depressurize and regulated by the pressure regulating valve, in which an inner portion of the body is sectioned into a high-pressure chamber communicating with the introduction port, the discharge pressure chamber communicating with the discharge port, a pressure control chamber accommodating the electric motor, and an atmospheric pressure chamber communicating with atmospheric air, a proximal end side of the valve shaft is supported in a state of being inserted into a cylindrical support hole having a communication hole communicating with the atmospheric air, and a seat diameter of the valve seat as a boundary between the high-pressure chamber and the discharge pressure chamber, a seal diameter of a seal member on the atmospheric pressure chamber side as a boundary between the high-pressure chamber and the atmospheric pressure chamber, and a seal diameter of a seal member on the pressure control chamber side as a boundary between the discharge pressure chamber and the pressure control chamber are substantially the same.

Accordingly, by disposing a passage to the atmospheric air side in the support hole that supports the proximal end side of the valve shaft, and setting the seat diameter of the valve seat that separates the high-pressure chamber and the discharge pressure chamber, the seal diameter of the seal member on the atmospheric pressure chamber side that separates the atmospheric pressure chamber and the high-pressure chamber, and the seal diameter of the seal member on the pressure control chamber side that separates the discharge pressure chamber and the pressure control chamber to be substantially the same, it is possible to balance each pressure load applied to the pressure regulating valve. Therefore, without changing the type and layout of the electric motor, one regulator can exhibit a favorable pressure regulating function while accommodating the various pressure applications.

In the present invention, in a case where a distal end side of the valve shaft is connected in a state of being inserted into a motion shaft that reciprocates in the axial direction through the driving of the electric motor, and the seal member on the pressure control chamber side is attached to an outer periphery of the motion shaft, other seat diameters and seal diameters are likely to be compatible by adopting a configuration in which the outer peripheral side of the motion shaft is sealed, even if a portion connected to the motion shaft on the pressure control chamber side is a valve shaft having a seat diameter smaller than the seat diameter of the valve seat.

In addition, in a case where an outer diameter of a contact portion with the seal member on the atmospheric pressure chamber side in the valve shaft is formed to be equal to an outer diameter of a contact portion with the seal member on the pressure control chamber side in the motion shaft, a structure in which two seal diameters are easily matched with each other can be obtained, which is particularly desirable.

In the present invention, in a case where the discharge pressure regulating unit is a feed screw mechanism in which a trapezoidal male screw that is formed on an outer peripheral face of a columnar motion shaft coaxially attached to the valve shaft and arranged movably and non-rotatably in the axial direction is combined with a trapezoidal female screw that is formed on an inner peripheral face of a cylindrical member externally fitted to the motion shaft and rotated through the driving of the electric motor, and meshes with the trapezoidal male screw, it is possible to move the valve shaft to a valve opening position or a valve closing position in a short time and accurately stop the valve shaft while reducing a size of the regulator as a whole.

According to the present invention in which three diameters of the seat diameter that separates the high-pressure chamber and the discharge pressure chamber, the seal diameter that separates the atmospheric pressure chamber and the high-pressure chamber, and the seal diameter that separates the discharge pressure chamber and the pressure control chamber are set to be substantially the same, it is possible to perform the favorable pressure regulation while accommodating the various pressure applications without changing the type and layout of the electric motor.

BRIEF DESCRIPTION OF DRAWINGS

FIG. 1 is a longitudinal sectional view showing a valve closed state of an electronically controlled regulator according to an embodiment of the present invention;
FIG. 2 is a longitudinal sectional view showing a valve opened state of the electronically controlled regulator of FIG. 1;
FIG. 3 is a functional block diagram of a fuel supply system in which the electronically controlled regulator of FIG. 1 is disposed; and
FIG. 4 is a longitudinal sectional view showing an electronically controlled regulator previously filed by the applicants.

DETAILED DESCRIPTION

Hereinafter, the embodiments of the present invention will be described with reference to the drawings.

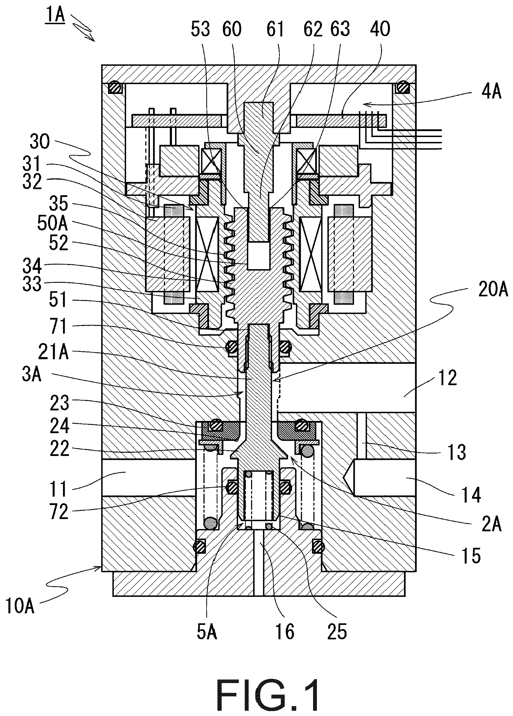

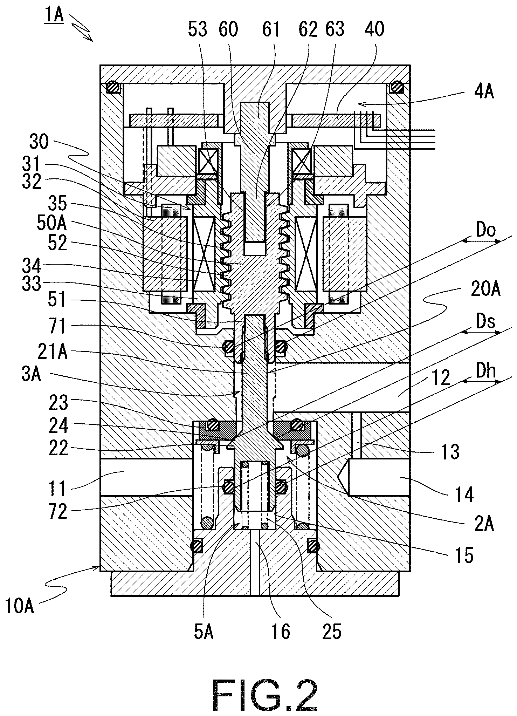

FIG. 1 shows a state during valve opening of an electronically controlled regulator 1A according to a first embodiment of the present invention, and FIG. 2 shows a state during valve closing. The electronically controlled regulator 1A is assumed to be used as a depressurizing unit that delivers a gas fuel which is a high-pressure fluid, while depressurizing the gas fuel to a predetermined pressure mainly in a supply system for the gas fuel or the like.
An inner portion of a body 10A made of metal and formed in a columnar shape is sectioned into a high-pressure chamber 2A constituting a high-pressure portion from an introduction port 11 for introducing a high-pressure fluid to a valve portion of a pressure regulating valve 20A, a discharge pressure chamber 3A constituting a discharge pressure portion from the valve portion of the pressure regulating valve 20A to a discharge port 12 for discharging a depressurized and regulated fluid, a pressure control chamber 4A including a discharge pressure regulating unit for regulating and maintaining a pressure of the fluid to be discharged, and an atmospheric pressure chamber 5A maintained at a pressure equal to an atmospheric pressure.
The pressure regulating valve 20A includes: a valve shaft 21A that is coaxially disposed with an umbrella-shaped valve body 22 on an outer peripheral portion at a middle position in a longitudinal direction, and includes a shaft-shaped member capable of reciprocating in an axial direction; a doughnut-shaped valve seat 23 that has a seat face 24 capable of being in close contact with the valve body 22, and a center formed with a valve hole; and a discharge pressure regulating unit that regulates a discharge pressure by causing the valve shaft 21A to reciprocate to change a distance between the valve body 22 and the valve seat 23.
The discharge pressure regulating unit includes: the electric motor 30 that includes a stator 31 supporting a winding 32 in a wound state and the rotor 33 in which a magnet 34 is arranged; a driver 40 that drives and controls the electric motor 30; and a motion shaft 50A that is coaxially connected to the valve shaft 21A by inserting a proximal end side of the valve shaft 21A into a connection hole 51 on a distal end side, and automatic regulation is performed to make a pressure of the depressurized fluid to be discharged equal to a set pressure by causing the valve body 22 of the valve shaft 21A disposed below the motion shaft to reciprocally slide in the axial direction between a valve closing position (FIG. 2) where the valve body 22 is in close contact with the seat face 24 of the valve seat 23 and a valve opening position (FIG. 1) where the valve body is separated from the seat face through the driving of the electric motor 30 controlled by the driver 40 to change an opening area.
The discharge pressure regulating unit opens and closes the pressure regulating valve 20A to maintain the pressure of the depressurized fluid to be discharged while operating the valve shaft moving structure by the electric motor 30 at the set pressure based on a value of a pressure sensor (not shown) that detects the pressure of the depressurized fluid in a pressure sensor installation portion 14 connected to the discharge port 12 through a communication hole 13.
Note that an installation location of the pressure sensor is not limited to an inner portion of the pressure sensor installation portion 14, and may be any location on a path for delivering the depressurized fluid as long as the pressure sensor can be arranged in series or in parallel with the discharge port 12 to detect the discharge pressure.
As shown in FIG. 1, in an initial state, the valve shaft 21A is pushed up by the pressure regulating spring 25 disposed in the atmospheric pressure chamber 5A on the proximal end side, and the valve body 22 is closed while being in close contact with the seat face 24 of the valve seat 23.
In the electronically controlled regulator 1A according to the present embodiment, the valve shaft moving structure is a feed screw mechanism including a combination of a trapezoidal male screw 52 formed on an outer peripheral face of the motion shaft 50A in a columnar shape connected to the distal end side of the valve shaft 21A, and the trapezoidal female screw 35 formed on an inner peripheral face of a rotor 33 that is a cylindrical member constituting a part of the electric motor 30 and meshing with the trapezoidal male screw 52, and the trapezoidal female screw 35 integrated with an inner peripheral face side of the rotor 33 rotates around the trapezoidal male screw 52 through the driving of the electric motor 30.

Then, the motion shaft 50A has a structure in which an insertion hole 53 having a planar portion formed on the inner peripheral face is formed at an end portion on a side opposite to the connection hole 51, a detent shaft 60 having a planar portion 63 formed on an outer peripheral face of a distal end 62 by fixing a proximal end 61 to the body 10A is slidably inserted into the insertion hole 53 in the axial direction, and the valve shaft 21A connected through the connection hole 51 is moved by restricting a rotation operation in the motion shaft 50A and converting the rotation operation into a linear operation in the axial direction by bringing the planar portions to be in close contact with each other.

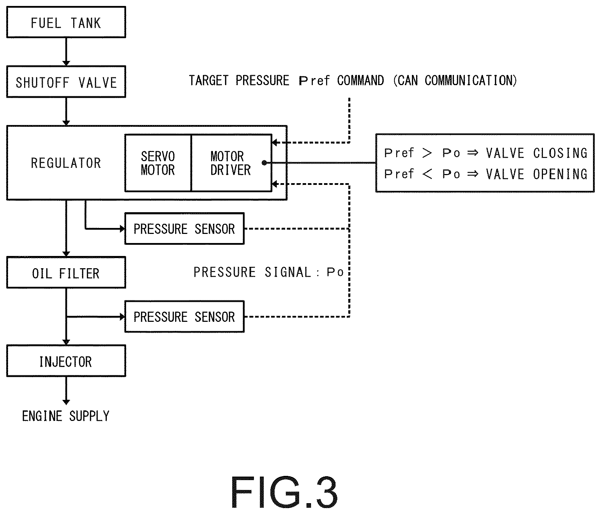

As shown in the functional block diagram of FIG. 3, the electronically controlled regulator 1A according to the present embodiment is arranged midway on a fuel supply path of the fuel supply system, and an electronic control unit without being shown executes control to operate the electric motor 30 in a valve opening direction by the driver 40 in a case where a pressure (Po) detected by the pressure sensor is lower than a commanded target pressure (Pref), and operate the electric motor 30 in a valve closing direction by the driver 40 in a case where the detected pressure (Po) is higher than the commanded target pressure (Pref).

Accordingly, a manner is adopted to regulate and maintain the discharge pressure at a set discharge pressure by performing opening/closing of the valve body 22 disposed on the valve shaft 21A and adjustment of the valve opening position while driving and controlling the electric motor 30 based on data of the discharge pressure detected by the pressure sensor without regulating the discharge pressure only by the pressure regulating spring 25 disposed at the proximal end of the valve shaft 21A, and it is possible to automatically maintain the various set discharge pressures while flexibly responding to the fluctuation of the required flow rate.

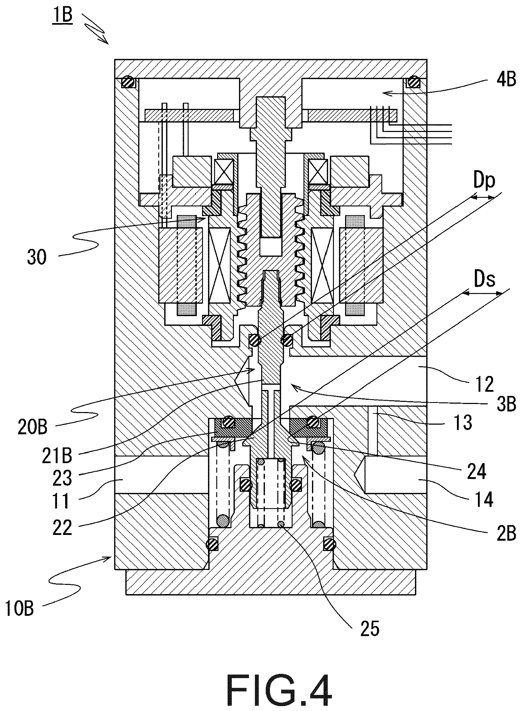

The discharge pressure regulating unit according to the present embodiment having such configuration and function is common to the electronically controlled regulator 1B previously filed by the applicants shown in FIG. 4. However, also in the electronically controlled regulator 1B, the required torque for the electric motor 30 may vary depending on the setting range of the high-pressure chamber 2B and the discharge pressure chamber 3B due to the pressure load applied to the pressure regulating valve 20B. Therefore, it is necessary to prepare and lay out the electric motor corresponding to the various pressure applications, which leads to an increase in cost in various aspects.

Therefore, the electronically controlled regulator 1A according to the present embodiment has a configuration in which a cylindrical support hole 15 is disposed in a portion of the body 10A located on the proximal end side of the valve shaft 21A, the proximal end side of the valve shaft 21A is inserted into the support hole 15 and communicates with the atmospheric air side through a communication hole 16 to form an atmospheric pressure chamber 5A, and the proximal end side of the valve shaft 21A is connected to the motion shaft 50A that reciprocates in the axial direction through the driving of the electric motor 30 accommodated in the pressure control chamber 4A.

Then, the seat diameter (the seal diameter) of the valve seat 23 as the boundary between the high-pressure chamber 2A and the discharge pressure chamber 3A, a seal diameter of an O-ring 72 which is the seal member on the atmospheric pressure chamber side as the boundary between the high-pressure chamber 2A and the atmospheric pressure chamber 5A, and a seal diameter of an O-ring 71 which is the seal member on the pressure control chamber side as the boundary between the discharge pressure chamber 3A and the pressure control chamber 4A are set to be substantially the same, and this aspect is a largest feature in the present invention.

The O-ring 71 is attached to an outer periphery of the motion shaft 50A, and the O-ring 72 is attached to an outer periphery of the valve shaft 21A. Then, an outer diameter of a contact portion with the O-ring 71 in the motion shaft 50A is formed to be equal to an outer diameter of a contact portion with the O-ring 72 in the valve shaft 21A.

Functions and a principle of the above configuration will be described in detail. Assuming that a seal diameter of a portion, is Dh, maintaining airtightness between the high-pressure chamber 2A and the atmospheric pressure chamber 5A by the O-ring 72, a seal diameter of a portion, is Do, holding airtightness between the discharge pressure chamber 3A and the pressure control chamber 4A by the O-ring 71, and a seat diameter of a portion, is Ds, holding airtightness between the high-pressure chamber 2A and the discharge pressure chamber 3A by coming into contact with the seat face 24 of the valve seat 23 when the valve shaft 21A of the pressure regulating valve 20A strokes, a pressure of the high-pressure chamber 2A is Pin, a pressure of the discharge pressure chamber 3A is Pout, and the atmospheric pressure is Pabs, a load F applied to the pressure regulating valve 20A can be expressed by the following mathematical expression.

[Math. 1]

$$F = P_{in} * D_h - P_{abs} * D_h + P_{out} * D_s - P_{in} * D_s + P_{abs} * D_o - P_{out} * D_o$$
$$= (D_h - D_s) * P_{in} + (D_s - D_o) * P_{out} + (D_o - D_h) * P_{abs}$$

*A direction where the valve body is opened is set to be (positive).

Here, when Dh ≈ Ds ≈ Do, the load F applied to the pressure regulating valve 20A becomes infinitely zero, and the required torque of the electric motor 30 is determined by mechanical parts around the pressure regulating valve 20A. Therefore, even if a fuel supply pressure or the discharge pressure range to be used is any value, it is possible to exhibit the favorable pressure regulating function while allowing the configuration unchanged to be applied without changing a specification or the layout of the electric motor 30.

Accordingly, in the electronically controlled regulator 1A described above, three portions of the seat diameter of the valve seat 23, the seal diameter of the O-ring 72, and the seal diameter of the O-ring 71, which are related to a drive portion of the pressure regulating valve 20A, are set to be the same in total. Therefore, it is possible to balance the pressure load applied to the pressure regulating valve 20A, and exhibit the favorable pressure regulating function while an electric motor of the same specification can be applied in any pressure application.

Note that, although it is ideal that the values of Dh, Ds, and Do described above are the same, it is difficult to actually manufacture a product with these values completely the same. However, it is preferable that an error between other two diameters with respect to the seat diameter of the valve seat 23 is kept less than 10% in a case where the seat diameter of the valve seat is used as a reference in terms of securing functions and effects of the present invention.

As described above, the electronically controlled regulator can perform the favorable pressure regulation while accommodating the various pressure applications without changing the type and layout of the electric motor according to the present invention.

## Claims

1. An electronically controlled regulator (1A) comprising, inside a body (10A) of the regulator formed with an introduction port (11) and a discharge port (12), a pressure regulating valve (20A) including: a valve shaft (21A) that is coaxially disposed with a valve body (22) on an outer peripheral portion at a middle position in a longitudinal direction and is able to reciprocate in an axial direction; a valve seat (23) having a seat face (24) capable of being in close contact with the valve body (22); and a discharge pressure regulating unit that regulates a pressure of a fluid by causing the valve shaft (21A) to reciprocate through driving of an electric motor (30) electronically controlled to change a distance between the valve body (22) and the valve seat (23), a high-pressure fluid introduced from the introduction port (11) being discharged from the discharge port (12) as a depressurized fluid at a set pressure on a side of a discharge pressure chamber (3A) while being depressurize and regulated by the pressure regulating valve (20A), wherein

   an inner portion of the body (10A) is sectioned into a high-pressure chamber (2A) communicating with the introduction port (11), the discharge pressure chamber (3A, 3B) communicating with the discharge port (12), a pressure control chamber (4A) accommodating the electric motor (30), and an atmospheric pressure chamber (5A) communicating with atmospheric air,
   a proximal end side of the valve shaft (21A) is supported in a state of being inserted into a cylindrical support hole (15) having a communication hole (16) communicating with the atmospheric air, and
   a seat diameter (Ds) of the valve seat (23) as a boundary between the high-pressure chamber (2A) and the discharge pressure chamber (3A),
   a seal diameter (Dh) of a seal member on the atmospheric pressure chamber side (72) as a boundary between the high-pressure chamber (2A) and the atmospheric pressure chamber (5A), and
   a seal diameter (Do) of a seal member on the pressure control chamber side (71) as a boundary between the discharge pressure chamber (3A) and the pressure control chamber (4A) are substantially the same.

2. The electronically controlled regulator (1A) according to claim 1, wherein a distal end side of the valve shaft (21A) is connected in a state of being inserted into a motion shaft (50A) that reciprocates in the axial direction through the driving of the electric motor (30), and the seal member on the pressure control chamber side (71) is attached to an outer periphery of the motion shaft (50A).

3. The electronically controlled regulator (1A) according to claim 2, wherein an outer diameter of a contact portion with the seal member on the atmospheric pressure chamber side (72) in the valve shaft (21A) is formed to be equal to an outer diameter of a contact portion with the seal member on the pressure control chamber side (71) in the motion shaft (50A).

4. The electronically controlled regulator (1A) according to claim 1, wherein the discharge pressure regulating unit is

a feed screw mechanism in which a trapezoidal male screw (52) that is formed on an outer peripheral face of the motion shaft (50A) coaxially attached to the valve shaft (21A) and arranged movably and non-rotatably in the axial direction is combined with

a trapezoidal female screw (35) that is formed on an inner peripheral face of a cylindrical member (33) externally fitted to the motion shaft (50A) and rotated through the driving of the electric motor (30), and meshes with the trapezoidal male screw (52).

1A

53 60 61 62 63 40

4A

30
31
32
35
50A
52
34
33
51
71
21A
3A
23
24
22
11
72

20A

12

13

14

2A

15

10A

5A 16 25

# FIG.1

FIG.2

FUEL TANK

SHUTOFF VALVE

TARGET PRESSURE Pref COMMAND (CAN COMMUNICATION)

REGULATOR | SERVO MOTOR | MOTOR DRIVER

Pref > Po ⇒ VALVE CLOSING
Pref < Po ⇒ VALVE OPENING

PRESSURE SENSOR

OIL FILTER

PRESSURE SIGNAL : Po

PRESSURE SENSOR

INJECTOR

ENGINE SUPPLY

FIG.3

FIG.4

Europäisches
Patentamt
European
Patent Office
Office européen
des brevets

# EUROPEAN SEARCH REPORT

Application Number

EP 24 17 6880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 602 525 A1 (KAWASAKI HEAVY IND LTD [JP]) 12 June 2013 (2013-06-12) * paragraph [0066] * * paragraph [0084] - paragraph [0096]; figures 8, 9, 19 * * paragraph [0113]; figure 19 * | 1-4 | INV. F02M21/02 |
| A | US 2013/112178 A1 (ASANUMA HIROSHI [JP]) 9 May 2013 (2013-05-09) * figures 2-4, 6, 10 * | 4 | |
| A | EP 2 631 459 A1 (KAWASAKI HEAVY IND LTD [JP]) 28 August 2013 (2013-08-28) * paragraph [0043] - paragraph [0061]; figure 2 * | 1-4 | |

|  |
|---|
| TECHNICAL FIELDS SEARCHED (IPC) |
| F02M |

The present search report has been drawn up for all claims

| Place of search | Date of completion of the search | Examiner |
|---|---|---|
| Munich | 11 September 2024 | Rauch, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6880

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | | Publication date |
|---|---|---|---|---|---|
| EP 2602525 | A1 | 12-06-2013 | CA 2806811 | A1 | 09-02-2012 |
| | | | CN 103003605 | A | 27-03-2013 |
| | | | EP 2602525 | A1 | 12-06-2013 |
| | | | JP 5427296 | B2 | 26-02-2014 |
| | | | JP WO2012017667 | A1 | 03-10-2013 |
| | | | KR 20130033459 | A | 03-04-2013 |
| | | | US 2013167950 | A1 | 04-07-2013 |
| | | | WO 2012017667 | A1 | 09-02-2012 |
| US 2013112178 | A1 | 09-05-2013 | JP 5828805 | B2 | 09-12-2015 |
| | | | JP 2013122236 | A | 20-06-2013 |
| | | | US 2013112178 | A1 | 09-05-2013 |
| EP 2631459 | A1 | 28-08-2013 | CA 2814458 | A1 | 26-04-2012 |
| | | | CN 103109070 | A | 15-05-2013 |
| | | | EP 2631459 | A1 | 28-08-2013 |
| | | | JP 5416676 | B2 | 12-02-2014 |
| | | | JP 2012087671 | A | 10-05-2012 |
| | | | KR 20130042646 | A | 26-04-2013 |
| | | | US 2013247876 | A1 | 26-09-2013 |
| | | | WO 2012053191 | A1 | 26-04-2012 |

EPO FORM P0459

For more details about this annex : see Official Journal of the European Patent Office, No. 12/82

**EP 4 471 268 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3594507 B
- JP 59160842 U
- JP 2022088066 A